(19) Europäisches Patentamt
European Patent Office
Office européen des brevets

(11) EP 2 388 298 A1

(12) **EUROPEAN PATENT APPLICATION**

(43) Date of publication:
**23.11.2011 Bulletin 2011/47**

(21) Application number: **11165446.3**

(22) Date of filing: **10.05.2011**

(51) Int Cl.:
***C09D 11/00*** *(2006.01)* ***C09D 11/02*** *(2006.01)*
***C09D 11/10*** *(2006.01)* ***C09B 47/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.05.2010 JP 2010113467**

(71) Applicant: **Fujifilm Corporation**
**Minato-ku**
**Tokyo (JP)**

(72) Inventors:
- **Kobayashi, Katsumi**
  **Kanagawa (JP)**
- **Kimura, Keizo**
  **Kanagawa (JP)**

(74) Representative: **HOFFMANN EITLE**
**Patent- und Rechtsanwälte**
**Arabellastraße 4**
**81925 München (DE)**

(54) **Infrared absorbing composition, infrared absorbing ink, recorded article, image recording method, and image detecting method**

(57) An infrared absorbing composition including a compound that is represented by formula (1) and has a hue in a powder state in the range of $20<L^*<40$, $1<a^*<20$, and $1<b^*<33$ in CIELAB space, an organic solvent having a solubility parameter in the range of from 7.3 to 12.1, and a resin is disclosed. In formula (I), each of $R_1$ to $R_{16}$ independently represents a hydrogen atom or a substituent group, provided that at least one of $R_1$ to $R_{16}$ represents an $R_{17}$-X- group or that the compound represented by formula (1) contains at least one condensed-ring structure in which any adjacent two of $R_1$ to $R_{16}$ form a ring; X represents -S-, -NH-, -$NR_{18}$-, or -O-; each of $R_{17}$ and $R_{18}$ independently represents an aliphatic group or an aryl group; and M represents two atoms selected from the group consisting of hydrogen atoms and monovalent metal atoms, or a divalent metal atom, or a divalent substituted mental atom moiety including a trivalent or tetravalent metal atom and a substituent group.

EP 2 388 298 A1

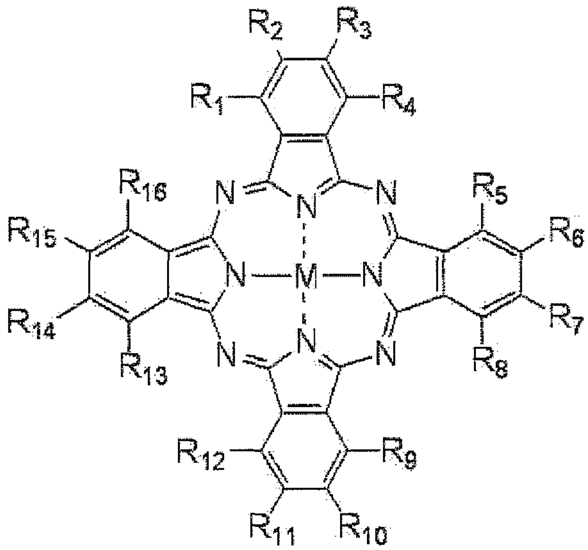

Formula (1)

## Description

BACKGROUND OF THE INVENTION

TECHNICAL FIELD

The present invention relates to an infrared absorbing composition, and to an infrared absorbing ink, a recorded article, an image recording method, and an image detecting method using the same.

DESCRIPTION OF RELATED ART

Near-infrared absorbing coloring materials which do not substantially absorb visible light but absorb infrared light have been widely used for various kinds of optoelectronics products such as near-infrared absorbing filters.
As in a security-related devices such as those for text or image validation, for example, the optoelectronics products may be exposed to high temperature, high humidity, or light irradiation depending on the use pattern, such as outdoor use.
For such reasons, it is important that the near-infrared absorbing coloring materials used remain stable over a long period of time, and it is required that the near infrared absorbing coloring materials are stable so that performance deterioration such as degradation over time is unlikely to occur. In particular, it is essential for the coloring material itself to have resistance to light to maintain high product quality for a long period of time.
With regard to technology related to the above, a naphthalocyanine near-infrared absorbing agent or an alkyl phthalocyanine near-infrared absorbing agent having a specific structure is proposed as a near-infrared absorbing agent having excellent light resistance, weather resistance, and heat resistance (for example, see Japanese Patent Application Laid-Open (JP-A) No. 2-43269 and JP-A No. 2-138382).
As a near-infrared absorbing ink which exhibits almost no absorption of visible light, a near-infrared absorbing ink having excellent light resistance due to containing a specific naphthalocyanine compound is disclosed (for example, see, JP-A No. 3-79683).

SUMMARY OF THE INVENTION

However, the conventional infrared absorbing agents as described above do not exhibits sufficient performance that is required for an infrared absorbing agent, such as with respect to absorption wavelength and weather resistance, and more improved performance, in particular, with respect to light resistance, is required.
Meanwhile, with regard to a red- to magenta-colored image formed by an infrared absorbing ink containing a red to magenta coloring agent together with an infrared absorbing agent or an image containing an infrared absorbing ink and formed by the infrared absorbing ink, there is a problem in that visibility of a red- to magenta-colored image formed as an upper layer or lower layer using an ink containing a red to magenta coloring agent is impaired due to the influence of the color of the infrared absorbing agent.
The invention has been made in view of the above, and provides an infrared absorbing composition, an infrared absorbing ink, a recorded article, an image recording method, and an image detecting method.
According to a first aspect of the present invention, an infrared absorbing composition including a compound that is represented by the following formula (1) and has a hue in a powder state in the range of 20<L*<40, 1<a*<20, and I <b*<33 in CIELAB space, an organic solvent having a solubility parameter in the range of from 7.3 to 12.1, and a resin, is provided.

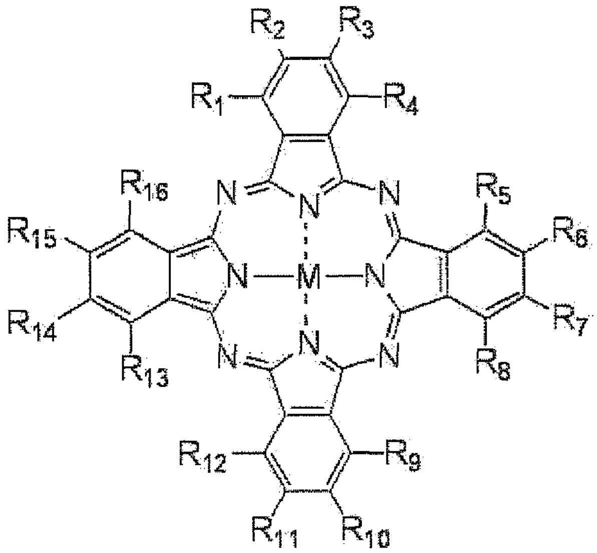

Formula (1)

In formula (1), each of $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, and $R_{16}$ independently represents a hydrogen atom or a substituent group, provided that at least one of $R_1$ to $R_{16}$ represents an $R_{17}$-X- group or that the compound represented by formula (1) contains at least one condensed-ring structure in which any adjacent two of $R_1$ to $R_{16}$ form a ring; X represents -S-, -NH-, -$NR_{18}$-, or -O-; each of $R_{17}$ and $R_{18}$ independently represents an aliphatic group or an aryl group; and M represents two atoms selected from the group consisting of hydrogen atoms and monovalent metal atoms, or a divalent metal atom, or a divalent substituted metal atom moiety including a trivalent or tetravalent metal atom and a substituent group.

According to a second aspect of the present invention, an infrared absorbing ink including the infrared absorbing composition of the first aspect is provided.

According to a third aspect of the present invention, a recorded article including a recording medium and an image formed thereon using the infrared absorbing ink of the second aspect, is provided.

According to a fourth aspect of the invention, an image recording method including recording an image by applying on a recording medium the infrared absorbing ink of the second aspect, is provided.

According to a fifth aspect of the invention, an image detection method including detecting, by an infrared ray detection device, image information of the image formed by the image recording method of the fourth aspect on the recording medium, is provided.

DETAILED DESCRIPTION OF THE INVENTION

Herein below, the infrared absorbing composition, infrared absorbing ink, recorded article, image recording method, and image detecting method according to the invention are explained in greater detail.

<Infrared Absorbing Composition>

The infrared absorbing composition according to the invention includes (A) a compound that is represented by the following formula (1) and has a hue in a powder state in the range of $20<L^*<40$, $1<a^*<20$, and $1<b^*<33$ in CIELAB space (herein below, it may be referred to as the "IR coloring material of the invention") and (B) an organic solvent having solubility parameter (i.e., SP value) in the range of from 7.3 to 12.1, and (C) a resin.

Depending on various conditions such as use and use environment, or depending on the necessity, the infrared absorbing composition of the invention may include a polymerizable compound other than the organic solvent described above and/or a polymerization initiator. One or more other components such as surfactant, solvent, and/or resin curing agent may be included in the infrared absorbing composition of the invention.

According to the invention, an organic solvent having the pre-determined SP value is used in combination with the compound represented by the formula (1) having a specific structure, which is an infrared absorbing coloring material.

Accordingly, it becomes easier for the infrared absorbing coloring material to be present in a solid-dispersed state in the composition, a liquid such as an ink using the composition, or an image obtained by using the composition. As a result, it is thought that the state of the coloring material in the composition may be stabilized and the resistance to light (i.e., light resistance) may be improved.

Since the IR coloring material of the invention (the compound that is represented by the following formula (1) and has a hue in the powder state in the range of 20<L*<40, 1<a*<20, and 1<b*<33 in CIELAB space in a form of powder) has a pre-determined color as described above, it is an infrared absorbing coloring material which exhibits a red to magenta hue.

Thus, the infrared absorbing composition according to the invention is an infrared absorbing composition which not only has excellent light resistance but also exhibits a red to magenta hue.

(A) Compound Represented by Formula (1)

The infrared absorbing composition related to the invention contains, as an infrared absorbing agent, at least one kind of compound that is represented by the following formula (1) and has a hue in the powder state in the range of 20<L*<40, 1<a*<20, and 1<b*<33 in CIELAB space (the IR coloring material of the invention). The IR coloring material of the invention is a phthalocyanine-based coloring material having a structure as described below.

The hue in the powder stated of the IR coloring material of the invention is within the range of 20<L*<40, 1<a*<20, and 1<b*<33 in CIELAB space. Preferably, it is within the range of 28<L*<40, 2<a*<18, and 2<b*<29 in CIELAB space. If it does not fall within this range (the range of 20<L*<40, 1<a*<20, and 1<b*<33 in CIELAB space), a color other than the red to magenta color is obtained.

Further, the hue in the powder state of the IR coloring material of the invention is preferably within the range of 28<L*<37 and 15<a+b*<35 in CIELAB space, and more preferably within the range of 28<L*<35 and 25<a*+b*<35 in CIELAB space.

Herein, the hue in the powder state of the IR coloring material indicates the hue in powder state having a volume average diameter of from 20 nm to 5 mm. The CIELAB color space is also referred to as the CIE1 976L*a*b* color space and is measured according to the method described in JIS Z8722: 2000, the disclosure of which is incorporated by reference herein. As a light source for observation, various lights for measuring color may be used depending on the actual condition for image observation. In general, a color coordinate may be calculated by using light D50 as a auxiliary standard. With respect to the method of calculating from color of an object, L*, a*, and b* are calculated according to the method described in JIS Z8729: 1994, the disclosure of which is incorporated by reference.

Formula (1)

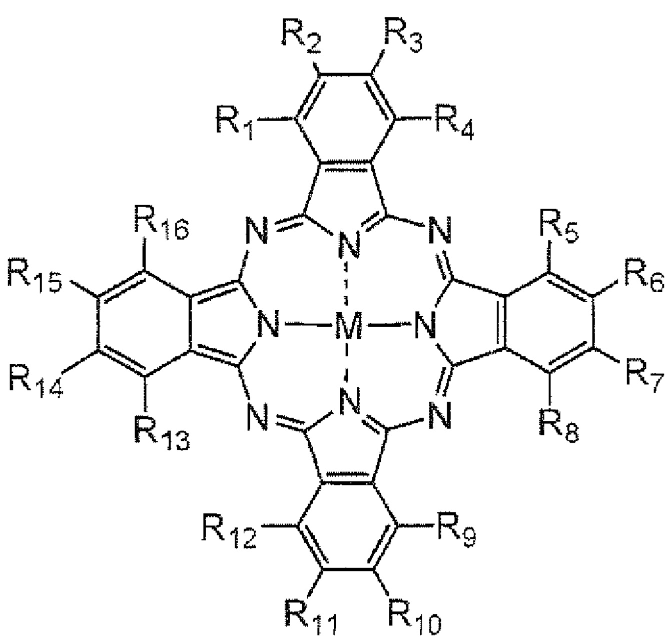

In formula (1), $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, and $R_{16}$ each independently represent a hydrogen atom or a substituent group, and at least one of $R_1$ to $R_{16}$ represents an $R_{17}$-X- group or the compound represented by formula (1) contains at least one condensed-ring structure in which any adjacent two of $R_1$ to $R_{16}$ form a ring. X represents -S-, -NH-, -$NR_{18}$-, or -O-, and $R_{17}$ and $R_{18}$ each independently represent an aliphatic group or an aryl group. M represents two atoms selected from the group consisting of hydrogen atoms and monovalent metal atoms, or a divalent mental atom, or a divalent substituted metal atom moiety including a trivalent or tetravalent metal atom and a substituent group.

The substituent group represented by $R_1$, to $R_{16}$ each may be any substitutuent group. Examples thereof include an aliphatic group, an aryl group, a heterocyclic group, a N-alkylacylamino group, an aliphatic oxy group, an aryloxy group, a heterocyclic oxy group, an aliphatic oxycarbonyl group, an aryloxycarbonyl group, a heterocyclic oxycarbonyl group, a carbamoyl group, an aliphatic sulfonyl group, a sulfamoyl group, an aliphatic sulfonamide group, an aryisulfonamide group, an aliphatic amide group, an arylamide group, an aliphatic amino group, an arylamino group, an aliphatic oxycarbonylamino group, an aryloxycarbonylamino group, an aliphatic thio group, an arylthio group, a hydroxy group, a cyano group, a sulfo group, a carboxyl group, a carbamoylamino group, a sulfamoylamino group, and a halogen atom.

Herein, the "aliphatic" may have a linear, branched, or cyclic aliphatic moiety, either saturated or unsaturated. Examples thereof include an alkyl group, an alkenyl group, a cycloalkyl group, and a cycloalkenyl group. The aliphatic group may be either unsubstituted or substituted with a substituent group. An aliphatic group having a total of from 1 to 15 carbon atoms is preferred as an aliphatic group.

The "aryl" may be any one of a monocycle and a condensed-cycle, and it may be either unsubstituted or substituted with a substituent group. The "heterocycle" indicates that the heterocyclic moiety has a hetero atom (for example, a nitrogen atom, a sulfur atom, or an oxygen atom) in the ring, and it may be any one of a saturated cycle and an unsaturated cycle, any one of a monocycle and a condensed-cycle, and either unsubstituted or substituted with a substituent group.

Among those described above, a substituent group represented by $R_1$ to $R_{16}$ is preferably an aliphatic group, an aryl group, an aliphatic oxy group, an aryloxy group, an aliphatic thio group, an arylthio group, an aliphatic amino group, an arylamino group, and a halogen atom.

The aliphatic group may be either unsubstituted or substituted with a substituent group, and either saturated or unsaturated. It may be cyclic. Preferably, it is an aliphatic group having a total of from 1 to 15 carbon atoms. More preferably, it is an aliphatic group having a total of from I to 10 carbon atoms. Examples of the aliphatic group include an alkyl group such as a ethyl group, an ethyl group, a propyl group, a butyl group, a nonyl group, a dodecyl group, an octadecyl group, and a 2-ethylhexyl group, and an alkenyl group such as a vinyl group, an allyl group, an ethynyl group, and an isopropenyl group.

The aryl group may be either unsubstituted or substituted with a substituent group. Preferably, it is an aryl group having a total of from 6 to 16 carbon atoms. More preferably, it is an aryl group having a total of from 6 to 12 carbon atoms. Examples thereof include a phenyl group, a 4-nitrophenyl group, a 2-nitrophenyl group, a 2-chlorophenyl group, a 2,4-dichlorophenyl group, a 2,4-dimethylphenyl group, a 2-methylphenyl group, a 4-methoxyphenyl group, a 2-methoxyphenyl group, and a 2-methoxycarbonyl 4-nitrophenyl group.

The aliphatic oxy group may be either unsubstituted or substituted with a substituent group, and either saturated or unsaturated. It may be cyclic. Preferably, it is an aliphatic oxy group having a total of from 1 to 12 carbon atoms. More preferably, it is an aliphatic oxy group having a total of from 1 to 10 carbon atoms. Examples thereof include a methoxy group, an ethoxy group, a propoxy group, an ethoxy ethoxy group, a phenoxy ethoxy group, and a thiophenoxy ethoxy group.

The aryloxy group may be either unsubstituted or substituted with a substituent group. Preferably, it is an aryloxy group having a total of from 6 to 16 carbon atoms in the aryl moiety. More preferably, it is an aryloxy group having a total of from 6 to 12 carbon atoms in the aryl moiety. Examples of the aryl moiety include phenyl, 4-nitrophenyl, 2-nitrophenyl, 2-chlorophenyl, 2,4-dichlorophenyl, 2,4-dimethylphenyl, 2-methylphenyl, 4-methoxyphenyl, 2-methoxyphenyl, and 2-methoxycarbonyl-4-nitrophenyl.

The aliphatic thio group may be either unsubstituted or substituted with a substituent group, and either saturated or unsaturated. It may be cyclic. As for the aliphatic thio group, an aliphatic thio group having a total of from 1 to 16 carbon atoms is preferred. An aliphatic thio group having a total of from 1 to 10 carbon atoms is more preferred. Examples thereof include a methylthio group, an ethylthio group, and an ethoxy ethylthio group.

The arylthio group may be either unsubstituted or substituted with a substituent group. Preferably, it is an arylthio group having a total of from 6 to 22 carbon atoms. More preferably, it is an arylthio group having a total of from 6 to 14 carbon atoms. Examples thereof include a phenylthio group.

The aliphatic amino group may be either unsubstituted or substituted with a substituent group, and either saturated or unsaturated. It may be cyclic. As for the aliphatic amino group, an aliphatic amino group having a total of from 1 to 16 carbon atoms is preferred. An aliphatic amino group having a total of from 1 to 10 carbon atoms is more

preferred. Examples thereof include a methylamino group and an ethylamino group.

The arylamino group may be either unsubstituted or substituted with a substituent group. Preferably, it is an arylamino group having a total of from 6 to 22 carbon atoms. More preferably, it is an arylamino group having a total of from 6 to 14 carbon atoms. Examples thereof include an anilino group.

Examples of the halogen atom include a chlorine atom, a bromine atom, and an iodine atom. A chlorine atom is preferred.

At least one of $R_1$ to $R_{16}$ in formula (1) represents a $R_{17}$-X- group or the compound represented by formula (1) includes at least one condensed-ring structure in which adjacent two of $R_1$ to $R_{16}$ (e.g.: $R_2$ and $R_3$, $R_6$ and $R_7$, etc.) forms a ring. X represents -S-, -NH-, -$NR_{18}$-, or -O-, and $R_{17}$ and $R_{18}$ each independently represent an aliphatic group or an aryl group.

The aliphatic group represented by $R_{17}$ and $R_{18}$ has the same definitions as the aliphatic group represented by $R_1$ to $R_{16}$ above, and also has the same preferred definitions as the aliphatic group represented by $R_1$ to $R_{16}$ above. The aryl group represented by $R_{17}$ and $R_{18}$ has the same definitions as the aryl group represented by $R_1$ to $R_{16}$ above, and also has the same preferred denititions as the aryl group represented by $R_1$ to $R_{16}$ above.

Among examples of the $R_{17}$-X- group, from the viewpoint of having low solubility in a solvent and having more favorable light resistance, preferable examples includes $R_{17}$-S-groups and $R_{17}$-O- groups, and more preferable examples include $R_{17}$-S- groups. Among them, a $R_{17}$-X- group wherein $R_{17}$ is an aryl group is particularly preferred.

When adjacent two oF $R_1$ to $R_{16}$ for a ring so as to form a condensed-ring structure, a structure in which $R_2$ and $R_3$, $R_6$ and $R_7$, $R_{10}$ and $R_{11}$ , and/or $R_{14}$ and $R_{15}$ among $R_1$ to $R_{16}$ are bonded to each other to form a ring is preferred. As for such ring structure, a naphthalene ring in which a 6-membered aromatic ring is condensed to a benzene ring to which $R_1$ and the like is bonded (i.e., naphthalocyanine structure) and a ring structure represented by the following structural formula (A) in which a 6-membered aliphatic ring is condensed to a benzene ring to which $R_1$ and the like is bonded are preferred.

In the following structural formula (A), X and Y each independently have the same definitions as X as described for $R_1$ to $R_{16}$ above. Preferably, it is -S- or -O-. $R_a$ and $R_b$ each independently represent a hydrogen atom or a substituent group. This substituent group has the same definitions as the substituent group that is represented by $R_1$ to $R_{16}$ above, and also has the same preferred definitions as the substituent group that is represented by $R_1$ to $R_{16}$ above. $R_a$ and $R_b$ may be bonded to each other to form a ring structure (for example, a benzene ring).

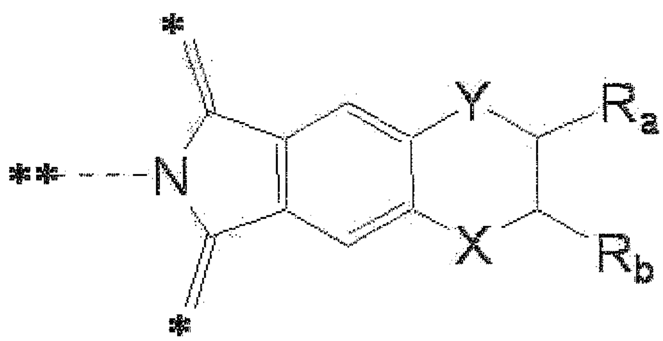

Structural formula (A)

M in formula (1) represents two atoms selected from the group consisting of hydrogen atoms and monovalent metal atoms, or a divalent metal atom, or a divalent substituted metal atom moiety including a trivalent or tetravalent metal atom and a substituent group. Preferred examples of M include two hydrogen atoms, a divalent metal atom, a divalent metal oxide, a divalent metal hydroxide, and a divalent metal chloride.

Specific examples of M include VO, TiO, Zn, Mg, Si, Sn, Rh, Pt, Pd, Mo, Mn, Pb, Cu, Ni, Mg, Sn, Pd, Co, Fe, AlCl, InCl, FeCl, $TiCl_2$, $SnCl_2$, $SiCl_2$, $GeCl_2$, $Si(OH)_2$, and $H_2$.
Among them, from the viewpoint of having low solubility in a solvent, M is preferably VO, Zn, Cu, Mn, Ni, Mg, Sn, Pd, Co, or $H_2$. M is more preferably Cu, VO, or Zn, and still more preferably Cu.

The phthalocyanine skeleton has a structure in which four benzene rings are condensed to the outside of the tetraazaporphyrin skeleton, and there are four positions (carbon atoms) in each benzene ring to which a substituent group may be attached. From the viewpoint of having low solubility in a solvent and showing favorable resistance to light, a compound in which a hydrogen atom is bonded at two β positions, that are far from the tetraazaporphyrin skeleton,

of each benzene ring, is preferred as a compound represented by formula (1) of the invention (the LR coloring material). Further, a compound in which an $R_{17}$-X- group wherein $R_{17}$ is an aryl group is bonded at two $\alpha$ positions, that are close to the tetraazaporphyrin skeleton, of each benzene ring, and a hydrogen atom is bonded at two $\beta$ positions, that are far from the tetraazaporphyrin skeleton, of each benzene ring, is preferred. In such case, M is preferably Cu for the same reason.

Among the compounds represented by the formula (1), preferable examples of the compound that may easily satisfy the above-described hue include compounds in which M is Cu.
For the same reason, preferable examples also include compounds in which M is Zn and $R_1$ to $R_{16}$ are each independently $R_{17}$-X-, compounds in which M is Mg and $R_1$ to $R_{16}$ are each independently $R_{17}$-X-, and compounds in which M is $TiCl_2$ and $R_1$ to $R_{16}$ are each independently $R_{17}$-X-.

Among the compounds represented by formula (1), from the viewpoint of having low solubility in a solvent and showing better resistance to light, a compound represented by the following formula (1a) or formula (1b) is preferable.

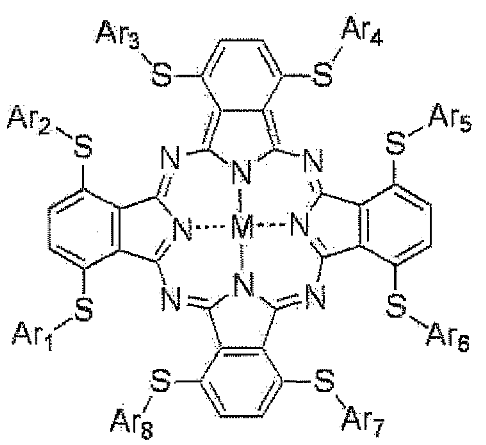

Formula (1a)

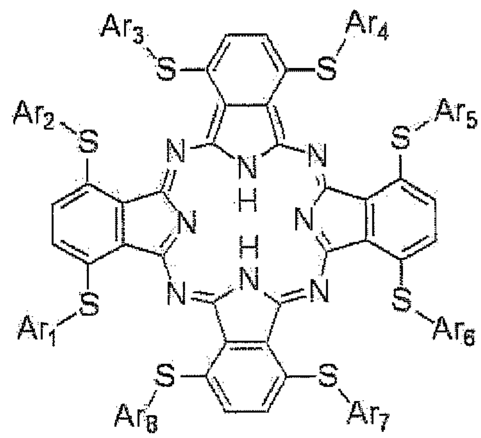

Formula (1b)

In formula (1a), M represents two atoms selected from the group consisting of hydrogen atoms and monovalent metal atoms, or a divalent metal atom, or a divalent substituted metal atom moiety including a trivalent or tetravalent metal atom and a substituent group.

Examples of M include two hydrogen atoms, a divalent metal atom, a divalent metal oxide, a divalent metal hydroxide, and a divalent metal chloride. Specific examples are the same as those described for M in formula (1). Among them, from the viewpoint of having low solubility in a solvent, M is preferably VO, Zn, Cu, Mn, Ni, Mg, Sn, Pd, Co, or $H_2$. More preferably, it is Cu, VO, or Zn. Still more preferably, it is Cu.

In formula (1a) and formula (1b), $Ar_1$, $Ar_2$, $Ar_3$, $Ar_4$, $Ar_5$, $Ar_6$, $Ar_7$, and $Ar_8$ each independently represent a substituted or unsubstituted aryl group. $Ar_1$ to $Ar_8$ may be the same or different from one another.

The aryl group represented by $Ar_1$ to $Ar_8$ above may be unsubstituted or substituted with a substituent group. Preferably, it is an aryl group having a total of from 6 to 16 carbon atoms. More preferably, it is an aryl group having a total of from 6 to 12 carbon atoms. Among them, an alkylphenyl group and/or an alkoxyphenyl group (preferably, the number of carbon atoms in the alkyl moiety in each group is from 1 to 10) are preferable. Specifically, $Ar_1$ to $Ar_8$ may each independently represent an alkylphenyl group or an alkoxyphenyl group (preferably the number of carbon atoms in the alkyl moiety in each group is from 1 to 10) . $Ar_1$ to $Ar_8$ may each represent an alkylphenyl group (preferably the number of carbon atoms in the alkyl moiety in each group is from 1 to 10). $Ar_1$ to $Ar_8$ may each represent an alkylphenyl group (preferably the number of carbon atoms in the alkyl moiety in each group is from 1 to 10). Examples of the aryl group include a phenyl group, a 2,4-dimethylphenyl group, a 2-methylphenyl group, a 2-ethylphenyl group, a 4-methoxyphenyl group, a 2-methoxyphenyl group, a 4-octyloxyphenyl group, and a 4-t-butylphenyl group.

Among the compounds represented by formula (1a) or formula (1b), preferable examples which may easily satisfy the above hue include compounds represented by formula (1a) in which M is Cu.
For the same reason, preferable examples also include compounds represented by formula (1a) in which M is Zn and $Ar_1$ to $Ar_8$ are each independently an aryl group substituted with alkyl or alkoxy, compounds represented by formula (1

a) in which M is Mn and $Ar_1$ to $Ar_8$ are each independently an aryl group substituted with alkyl or alkoxy, and compounds represented by formula (1a) in which M is Mg and $Ar_1$ to $Ar_8$ are each independently an aryl group substituted with alkyl or alkoxy.

Further, for the same reason, preferable examples also include compounds represented by formula (1b) in which $Ar_1$ to $Ar_8$ are each independently an aryl group substituted with alkyl or alkoxy.

Herein below, specific examples of the compound represented by formula (1) are given. However, the invention is not limited to those exemplary compounds.

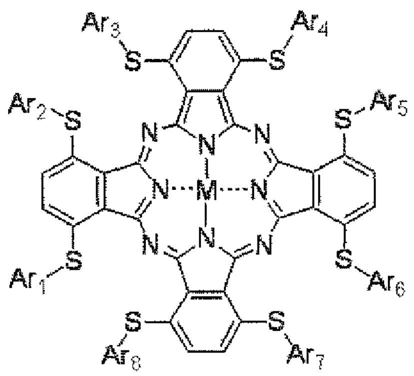

| Compound | M | $Ar_1$ to $Ar_8$ |
|---|---|---|
| 1 | Cu | 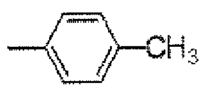 |
| 2 | Cu | 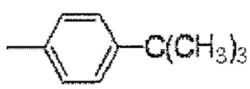 |
| 3 | Cu | 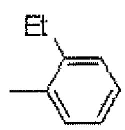 |
| 4 | Cu | 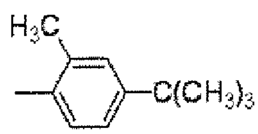 |
| 5 | Cu | 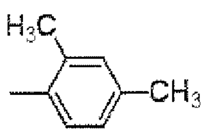 |
| 6 | Cu | 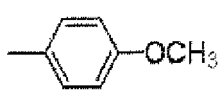 |
| 7 | Cu | 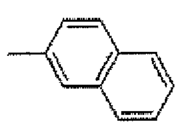 |
| 8 | Cu | 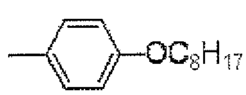 |

(continued)

| Compound | M | $Ar_1$ to $Ar_8$ |
|---|---|---|
| 9 | V=O | 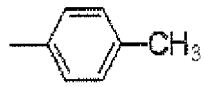 |
| 10 | V=O | 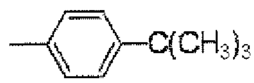 |
| 11 | Zn | 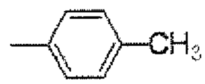 |
| 12 | Zn | 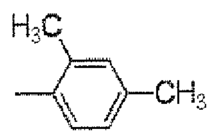 |

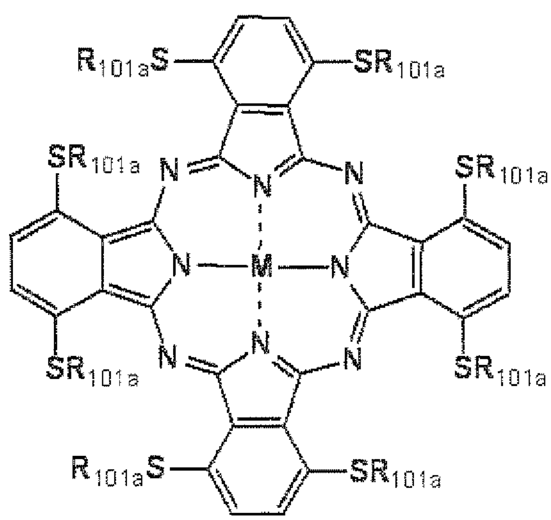

| Compound | M | $R_{101a}$ |
|---|---|---|
| 13 | 2H | $(CH_2)_7CH_3$ |
| 14 | 2H | $(CH_2)_{11}CH_3$ |
| 15 | Cu | $(CH_2)_7CH_3$ |
| 16 | Cu | $(CH_2)_{11}CH_3$ |
| 17 | Cu | $CH_3$ |
| 18 | Zn | $(CH_2)_7CH_3$ |
| 19 | V=O | $(CH2)_{11}CH_3$ |

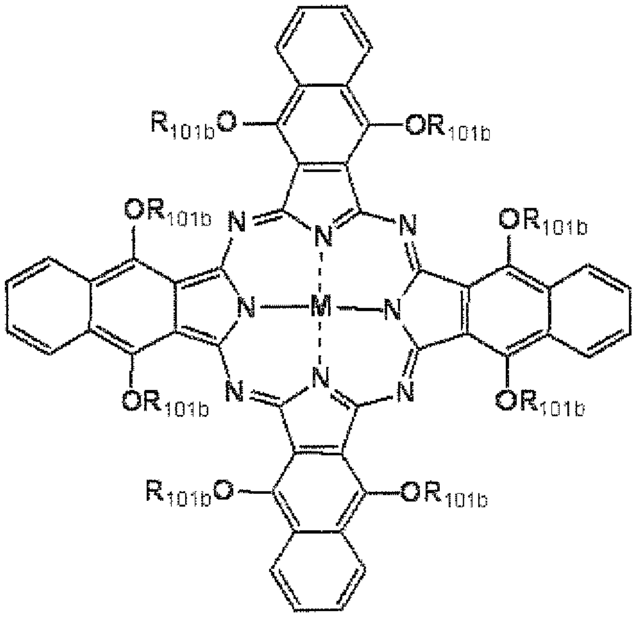

| Compound | M | $R_{101b}$ |
|---|---|---|
| 20 | 2H | $(CH_2)_7CH_3$ |
| 21 | 2H | $(CH_2)_{11}CH_3$ |
| 22 | Cu | $CH_3$ |
| 23 | Cu | $C_2H_5$ |
| 24 | Cu | $(CH_2)_3CH_3$ |
| 25 | Cu | $(CH_2)_7CH_3$ |
| 26 | Cu | $(CH_2)_{11}CH_3$ |
| 27 | Zn | $(CH_2)_7CH_3$ |
| 28 | V=O | $(CH_2)_{11}CH_3$ |

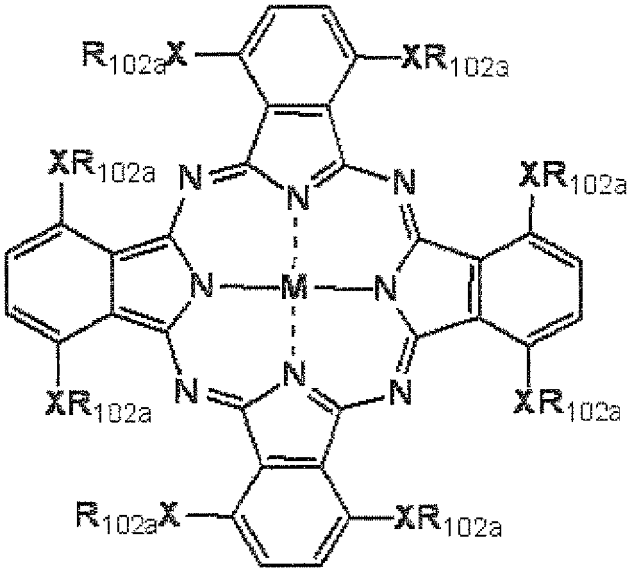

| Compound | M | X | $R_{102a}$ |
|---|---|---|---|
| 29 | 2H | O | $(CH_2)_7CH_3$ |
| 30 | 2H | NH | $(CH2)_{11}CH_3$ |
| 31 | Cu | NH | $CH_3$ |
| 32 | Cu | $N(C_2H_5)$ | $C_2H_5$ |
| 33 | Cu | O | $(CH_2)_3CH_3$ |
| 34 | Cu | O | $(CH_2)_7CH_3$ |
| 35 | Cu | NH | $(CH_2)_{11}CH_3$ |
| 36 | Zn | NH | $(CH_2)_7CH_3$ |
| 37 | V=O | NH | $(CH_2)_{11}CH_3$ |

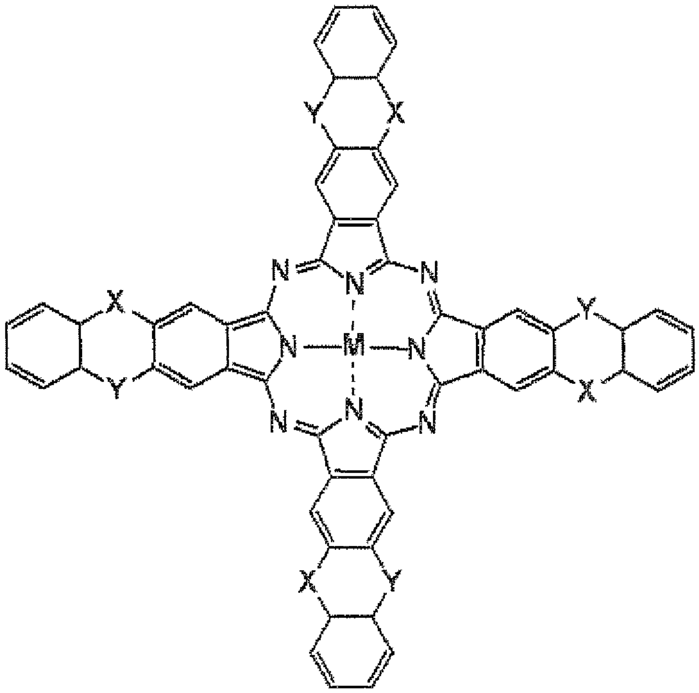

| Compound | M | X | Y |
|---|---|---|---|
| 38 | 2H | O | O |
| 39 | 2H | S | NH |
| 40 | 2H | NH | NH |
| 41 | Cu | O | O |
| 42 | Cu | s | NH |
| 43 | Cu | NH | NH |
| 44 | Cu | NMe | NMe |
| 45 | Cu | S | NMe |
| 46 | Cu | NMe | NMe |
| 47 | Zn | O | O |
| 48 | Zn | S | NH |
| 49 | Zn | NH | NH |
| 50 | V=O | O | O |
| 51 | V=O | S | NH |
| 52 | V=O | NH | NH |

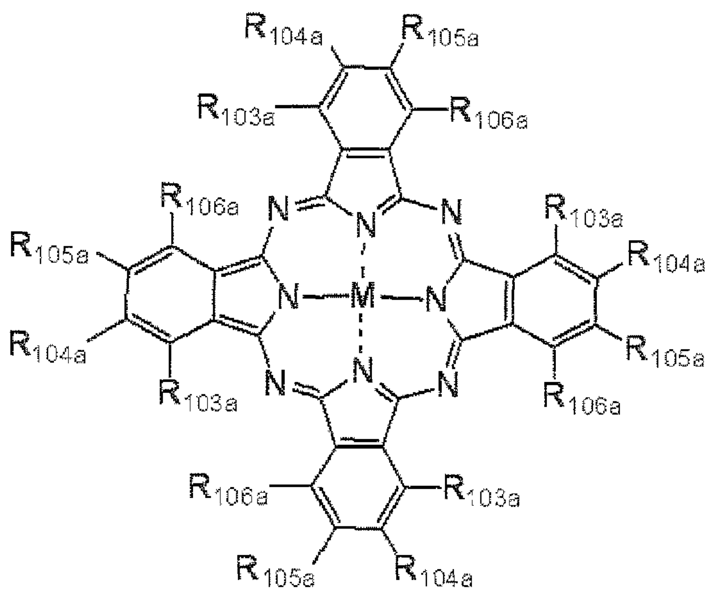

| Compound | M | $R_{103a}$ | $R_{104a}$ | $R_{105a}$ | $R_{106a}$ |
|---|---|---|---|---|---|
| 53 | 2H | H | NHPh | NHPh | H |
| 54 | 2H | H | $O(CH_2)_3CH_3$ | $O(CH_2)_3CH_3$ | H |
| 55 | 2H | NHMe | NHMe | NHMe | NHMe |
| 56 | Cu | H | NHPh | NHPh | H |
| 57 | Cu | H | $O(CH_2)_3CH_3$ | $O(CH_2)_3CH_3$ | H |
| 58 | Cu | NHMe | NHMe | NHMe | NHMe |
| 59 | Cu | $O(CH_2)_3CH_3$ | $O(CH_2)_3CH_3$ | $O(CH_2)_3CH_3$ | $O(CH_2)_3CH_3$ |
| 60 | Cu | $O(CH_2)_3CH_3$ | NMe | NMe | $(CH_2)_7CH_3$ |
| 61 | Cu | $O(CH_2)_3CH_3$ | Cl | Cl | $O(CH_2)_3CH_3$ |
| 62 | Zn | H | NHPh | NHPh | H |
| 63 | Zn | H | $O(CH_2)_3CH_3$ | $O(CH_2)_3CH_3$ | H |
| 64 | Zn | NHMe | NHMe | NHMe | NHMe |
| 65 | V=O | H | NHPH | NHPh | H |
| 66 | V=O | H | $O(CH_2)_3CH_3$ | $O(CH_2)_3CH_3$ | H |
| 67 | V=O | NHMe | NHMe | NHMe | NHMe |

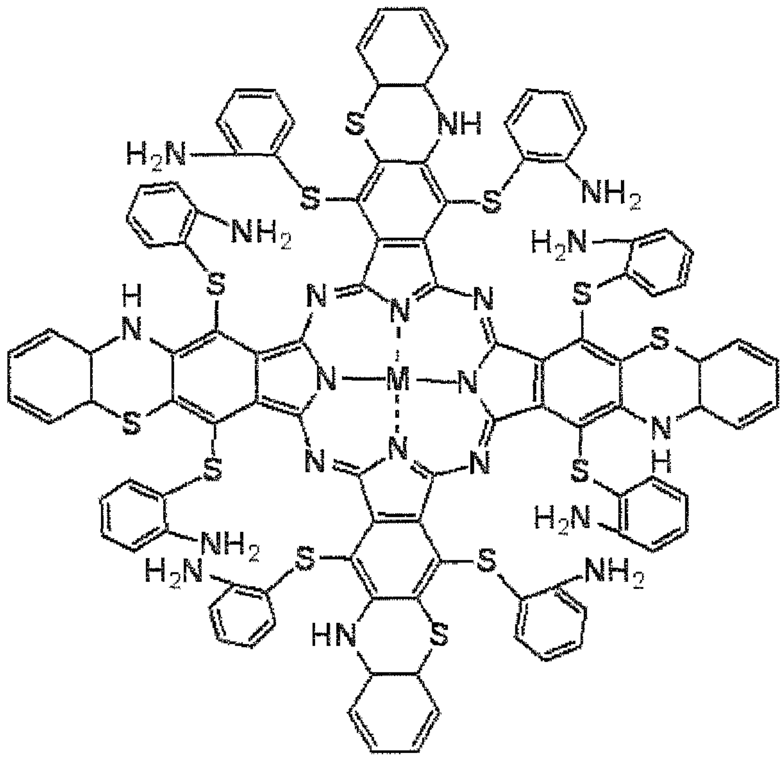

| Compound | M |
|---|---|
| 68 | 2H |
| 69 | Cu |
| 70 | Zn |
| 71 | V=O |
| 72 | Sn |
| 73 | Pd |
| 74 | Mg |
| 75 | Ni |

The IR coloring material of the invention may be synthesized according to a conventionally known synthetic method.

The content of the IR coloring material(s) in the infrared absorbing composition of the invention is preferably from 0.01 to 99% by mass. and more preferably from 0.1 to 90% by mass with respect to the total mass of the composition. When the content of the IR coloring material(s) is 0.01 % by mass or more, favorable light resistance may be obtained and, therefore, readability is excellent when recorded as an image. When the content of the IR coloring material(s) is 99% by mass or less, it is advantageous in terms of printing property at the time of printing, friction resistance of a printed article, storage stability, and the like.

In addition to the IR coloring material as described above, an infrared absorbing coloring material represented by formula (2) below may be used together with the above-described IR coloring material.

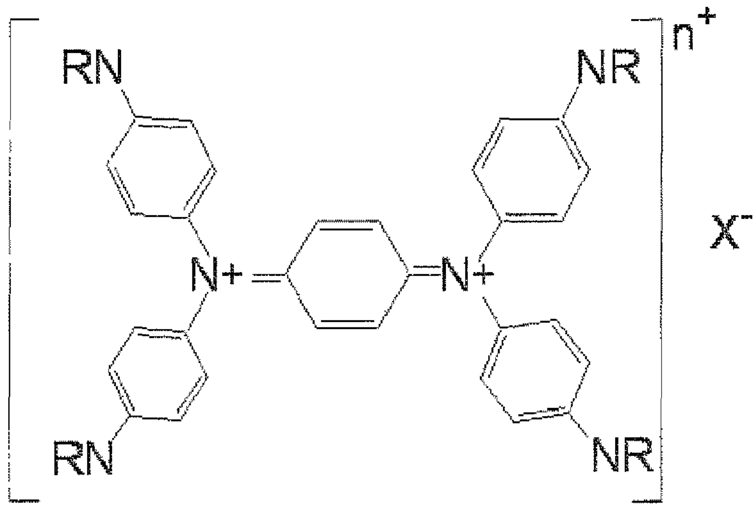

Formula (2)

In formula (2), R represents a hydrogen atom or an aliphatic group having 1 to 12 carbon atoms, n represents 1 or 2, and X represents an anion.

Herein below, specific examples of the infrared absorbing coloring material represented by formula (2) are described. However, in the present invention, the coloring material represented by formula (2) is not limited to them.

| Compound | R | $X^-$ |
|---|---|---|
| 101 | $CH_3$ | $ClO_4^-$ |
| 102 | $CH_3$ | $BF_4^-$ |
| 104 | $CH_3$ | $CF_3COO^-$ |
| 105 | $CH_3$ | $SbF_6^-$ |
| 106 | $C_2H_5$ | $PhSO_3^-$ |
| 107 | $C_2H_5$ | $ClO_4^-$ |
| 108 | $(CH_2)_3CH_3$ | $ClO_4^-$ |
| 109 | $(CH_2)_3CH_3$ | $BF_4^-$ |
| 110 | $(CH_2)_3CH_3$ | $(CF_3SO_2)_2N^-$ |
| 111 | $(CH_2)_3CH_3$ | $SbF_6^-$ |
| 112 | $CH_2CH(C_2H_5)(CH_2)_3CH_3$ | $ClO4^-$ |
| 113 | $CH_2CH(C_2H_5)(CH_2)_3CH_3$ | $BF_4^-$ |
| 114 | $CH_2CH(C_2H_5)(CH_2)_3CH_3$ | $(CF_3SO_2)_2N^-$ |
| 115 | $(CH_2)_{11}CH_3$ | $ClO_4^-$ |
| 116 | $(CH_2)_{11}CH_3$ | $BF_4^-$ |

(B) Organic Solvent

The infrared absorbing composition of the invention contains at least one kind of organic solvent which has the solubility parameter (herein below, abbreviated as "SP value") in the range of from 7.3 to 12.1. By using an organic solvent having the SP value in this range, it is possible to have the IR coloring material of the invention be present in a solid-dispersed state.

The organic solvent used in the invention has the SP value in the range of 7.3 to 12.1. When the SP value is not within the range, solubility of the IR coloring material of the invention may tend to increase, which may cause reduction in light resistance improving effect. Specifically, when the SP value is lower than 7.3 or higher than 12.1, stability of an ink may become problematic, for example, a change in the reflection spectrum of a printed article may occur before and after the storage over time in a ink state.
When two or more kinds of organic solvent are mixed and used, the weighted-average SP value based on the use amounts of the mixed organic solvents is in the range of from 7.3 to 12.1.
The SP value is a solubility parameter calculated according to the Fedors method (unit: $(cal/cm_3)^{1/2}$), and it corresponds to a value expressed by the following equation.

$$\text{SP value } (\delta) = (\Delta H/V)^{1/2}$$

In the equation, $\Delta H$ indicates molar heat of vaporization (cal) and V indicates molar volume ($cm^3$). The sum of the molar heat of vaporization of atomic groups ($\Delta ei$), i.e., $\Sigma\Delta ei$ ($=\Delta H$), and the sum of molar volume ($\Delta vi$), i.e., $\Sigma\Delta vi(V)$, may be used as $\Delta H$ and V, respectively, as described in "POLYMER ENGINEERING AND SCIENCE, 1974, Vol. 14, No. 2, ROBERT F. FEDORS. (pages 151 to 153)," and thus the SP value is obtained as $(\Sigma\Delta ei/\Sigma\Delta Avi)^{1/2}$.
Examples of the organic solvent which may be used in the invention include aromatic hydrocarbons, aliphatic hydrocarbons, ketones, esters, ethers, alcohols, and liquid-phase polymerizable compounds.
Examples of the aromatic or aliphatic hydrocarbon include n-hexane (SP value: 7.3), n-octane (SP value: 7.6), toluene (SP value: 8.9), ethyl benzene (SP value: 8.8), xylene (SP value: 8.8), and benzene (SP value: 9.2).
Examples of the ketone include ethyl isobutyl ketone (SP value: 8.3), methyl isopropyl ketone (SP value: 8.5), methyl ethyl ketone (SP value: 9.3), and methyl propyl ketone (SP value: 8.7).
Examples of the ester include ethyl acetate (SP value: 9.1), butyl acetate (SP value: 8.5), isobutyl acetate (SP value: 8.3), isopropyl acetate (SP value: 8.4), ethylene glycol monobutyl ether acetate (SP value: 8.9), ethylene glycol monobutyl ether acetate (BMGAC) (SP value: 8.9), and diethylene glycol monoethyl ether acetate (EDGAC) (SP value: 9.0).
Examples of the ether include diethyl ether (SP value: 7.4).
Examples of the alcohol include n-butanol (SP value: 11.4), n-hexanol (SP value: 10.7), isopropyl alcohol (SP value: 11.5), cyclohexanol (SP value: 11.4), diethylene glycol monobutyl ether (BDG) (SP value: 10.5), diethylene glycol monoethyl ether (EDG) (SP value: 10.5), and ethylene glycol monoethyl ether (EMG) (SP value: 11.5).
The polymerizable compound is a monomer compound having polymerizable group such as ethylenic double bond. Examples thereof include a (meth)acrylic monomer.
Examples of the (meth)acrylic monomer include methyl methacrylate (SP value: 8.6), cyclohexyl methacrylate (SP value: 9.1), n-butyl methacrylate (SP value: 8.6), t-butyl methacrylate (SP value: 8.3), n-butyl acrylate (SP value: 9.2), and allyl methacrylate (SP value: 8.8).
As for the polymerizable compound, commercially available products may be used. Examples of the commercially available product which may be used include KAYARAD series manufactured by Nippon Kayaku Co., Ltd. (for example, KAYARAD TMPTA, KAYARAD DPHA, and KAYARAD TPGDA).
As for the organic solvents which may be used the invention, an organic solvent having the SP value in the range of from 7.3 to 11.5 is preferable. An organic solvent having the SP value in the range of from 7.4 to 11.4 is more preferable. Among them, preferable examples of the organic solvent include aromatic hydrocarbons, aliphatic hydrocarbons, ketones, esters, alcohols, and polymerizable compounds each having the SP value in the range described above. More preferable examples include aromatic hydrocarbons, aliphatic hydrocarbons, ketones, esters, and polymerizable compounds each having the SP value in the range described above are more preferable.
Only one kind of organic solvent may be used singly. However, from the viewpoint of further increasing the light resistance improving effect, it is preferable to use two or more kinds of organic solvents in combination.
As an embodiment of using two or more kinds of an organic solvent in combination, from the viewpoint of having low solubility and light resistance improving effect of the IR coloring material of the invention, combined use of an aromatic or aliphatic hydrocarbon and a ketone is preferable. Combined use of an aromatic hydrocarbon and a ketone is more preferable. An embodiment in which toluene and methyl isobutyl ketone are used in combination is still more preferable.
When the polymerizable compound (i.e., a monomer) is used as an organic solvent, it is preferable to use two or more kinds of polymerizable compound in combination.
The content of the organic solvent(s) in the infrared absorbent composition of the invention is preferably 1 to 1,000,000% by mass, and more preferably 10 to 500,000% by mass, compared to the IR coloring material(s) of the invention. When the content of the organic solvent(s) is 1% by mass or more, dispersability and stability over time of the IR coloring material may be more favorable. The content is 1,000,000% by mass or less may be advantageous in

terms of reading sensitivity of desired IR absorption.

From the viewpoint of exhibiting stable light resistance over a long period of time while maintaining a hue of red to magenta, using one or more kinds of the compounds represented by formula (1a) or formula (1b) as an IR coloring materials and one or more organic solvents having the SP value in the range of from 7.4 to 11.4 is preferable in the invention. Using the compound 1 as an IR coloring material and one or more kinds of organic solvents selected from the group consisting of aromatic hydrocarbons and ketones (for example, an aromatic hydrocarbon, a ketone, a combination of an aromatic hydrocarbon and a ketone, or the like) is more preferable.

(C) Resin

The infrared absorbing composition of the invention contains at least one kind of resin. Resin is not particularly limited, and may be selected depending on specific use and purpose, etc.

Suitable examples of the resin include rosin, modified rosin, rosin derivatives, modified rosin derivatives, petroleum resins, dicyclopentadiene resins and modified dicyclopentadiene resins.

The rosin is a natural resin which contains rosin acid as a main component. Examples of modified rosin and derivatives of modified rosin include polymerized rosin (for example, rosin acid ester resin, etc.), disproportionated rosin, hydrogenated rosin, and maleic acid modified rosin.

The petroleum resin is a polymerized product of unsaturated compounds a having high carbon number that are generated by naphtha decomposition, and it includes an aliphatic-based resin having C5 fraction as raw material, an aromatic-based resin having C9 fraction as raw material, and a copolymer-based resin. Examples of the petroleum resin include dicyclopentadiene-based petroleum resin and aromatic-based petroleum resin.

Examples of the modified dicyclopentadiene resin include a modified product such as a resin modified with unsaturated polyester and a resin modified with phenol.

The content of the resin(s) in the infrared absorbent composition is preferably from 1% to 99%, and more preferably from 10% to 98% by mass ratio with respect to the total solid matter in the composition. When the resin content is 1% by mass or more, it is advantageous in terms of resistance of a printed article to a solvent. From the viewpoint of having reading sensitivity of a printed article by IR light, it may be set to 99% by mass or less.

(D) Other components

The infrared absorbing composition of the invention may be prepared by using, in addition to the components as described above, one or more additional components such as a surfactant, a solvent other than the above-described organic solvents, a curing agent for resin, an electro-donating chromogenic organic compound, an electron-accepting compound, and a polar organic compound, if necessary.

Examples of the surfactant which may be used include non-ionic surfactants, example thereof including alkylene oxide-based surfactants, glycerin-based surfactants, glycidol-based surfactants, and alkylphenol ethylene oxide adduct-based surfactants; cationic surfactants, examples thereof including cyclic amines, ester amides, quaternary ammonium salts, hydantoin derivatives, heterocycles, phosphoniums and sulfoniums; anionic surfactants having an acidic group such as carboxyl group, sulfonic acid group, and sulfate group; and amphoteric surfactants, examples thereof including amino acids, aminosulfonic acids, sulfate esters of amino alcohol, phosphate esters of amino alcohol, and alkyl betaines.

With regard to the surfactant, detailed information is given in "Handbook of Surfactants" (published by SANGYO-TOSHO Publishing Co., Ltd.). It is not necessary to use a pure surfactant. Impurities such as an isomer, a non-reacted material, a by-product, a degraded product, and an oxide may be included in addition to the main component. The impurities are preferably 30% by mass or less, and more preferably 10% by mass or less.

Only one kind of the surfactant may be used singly, or two or more of kinds thereof may be used in combination.

The infrared absorbing composition of the invention may be prepared by dispersing in advance the IR coloring material in the organic solvent and adding the resin thereto. In such case, a dispersant for dispersing the IR coloring material used in the invention may be included. The surfactant may be used as a dispersant, as in addition to a usage as an additive as described above. The surfactant used as a dispersant is preferably a non-ionic surfactant, an anionic surfactant, or a cationic surfactant. It is more preferably a non-ionic surfactant or an anionic surfactant. Still more preferably, it is an anionic surfactant. Even still more preferably, it is an organic sulfonate metal salt having 40 or less carbon atoms. Even still further more preferably, it is an organic sulfonate metal salt having 30 or less carbon atoms. Most preferably, it is a sodium salt or a potassium salt of an organic sulfonic acid having 25 or less carbon atoms.

When the dispersant is added, as the timing for adding it during the process of dispersing coloring material particles, the dispersant is preferably added together with an IR coloring material to a solvent or after dispersing the IR coloring material in a solvent. Of the two cases, like the former, adding the dispersant during the process of dispersing is most preferable.

Further, within the range that the effect of the invention is not impaired, a solvent other than (B) the organic

solvent may be contained. Herein, examples of the solvent include a dispersion medium for dispersion that is described in paragraph number [0071] of JP-A No. 2008-105958.

The infrared absorbing composition of the invention may contain a curing agent for the resin. When, for example, an urethane resin is used as the resin, the curing agent may be a polyisocyanate resin. The curing agent may be used within the range of from 1 to 70% by mass with respect to the resin.

The infrared absorbing composition of the invention may be also constituted to contain an electron-donating chromogenic organic compound, an electron-accepting compound, and/or a polar organic compound as a main component(s) so that it may transiently show a color from transparency according to a change in temperature condition and reversibly exhibit an infrared absorbing property.

The infrared absorbing composition of the invention may be used for preparing a desired infrared absorbing material by, for example, applying it to a method of forming an infrared absorbing layer by dispersing the IR coloring material of the invention in a resin and coating or hard-coating it on a surface of a paper, a resin sheet, a film, a glass, or a metal layer, to a method of preparing an infrared absorbing resin by adding the composition to a resin material such as monomer and neutralizing the mixture, or to a method of preparing an infrared absorbing resin by adding the composition to a resin followed by heat-melting and dispersing the composition in a molten state in a resin.

Among them, an infrared absorbing ink using the infrared absorbing composition of the invention is explained herein below.

<Infrared absorbing ink and recorded article>

The infrared absorbing ink of the invention is constituted by using the infrared absorbing composition of the invention described above. As the infrared absorbing composition is used therefor, the infrared absorbing ink has excellent light resistance.

The infrared absorbing ink of the invention contains at least (A) the IR coloring material in the invention, (B) the organic solvent, and (C) the resin. Depending on use and purpose, it may be constituted by further using one or more additional components such as a coloring agent, a polymerization initiator, a polymerizable compound not included in the organic solvent, and one or more other additives.

By containing a coloring agent, an ink having a desired hue may be provided. Examples of coloring agents include a dye and a pigment. The coloring agent may be contained within the range that the effect of the invention is not impaired.

In particular, as the infrared absorbing composition in the infrared absorbing ink of the invention exhibits red to magenta hue, when a red to magenta coloring agent is used, favorable visibility of an image created with the infrared absorbing ink may be attained without affecting the hue of the infrared absorbing ink that is expressed by the coloring agent.

Herein, preferred examples of the red coloring agent include C. I. DISPERSE RED 1, 5, 9, 11, 13, 22, 50, 60, 73, 74, 82, 91, 92, 135, 152, 153, 167, 177, 179, 277, 343, 356, and 362.

Preferred examples of the magenta coloring agent include C. I. DISPERSE VIOLET 1, 8, 26, 28, 31, 33, 36, 63, 77, and 93.

When a polymerizable compound or a resin in the ink includes a polymerizable group, by containing a polymerization initiator, the polymerizable group included in the ink may be subjected to polymerization reaction to cure the ink. As a result, strength of a recorded image (for example, rub-off resistance) may be improved.

Any kind of a polymerization initiator may be used if it is a compound capable of generating active species for initiating a polymerization reaction of a polymerizable group such as a monomer component, It may be appropriately selected from known photopolymerization initiators. Examples thereof include a compound containing a trihalomethyl group, an acridine-based compound, an acetophenone-based compound, a bis-imidazole-based compound, a triazine-based compound, a benzoin-based compound, a benzophenone-based compound, an $\alpha$-diketone-based compound, a polynuclear quinone-based compound, a xanthone-based compound, and a diazo-based compound.

The recorded article of the invention includes an image that is formed by using the infrared absorbing ink of the invention. Since the infrared absorbing composition of the invention is used therefor, the recorded article of the invention having better light resistance compared to conventional ones and also having red to magenta hue may be obtained.

Examples of the image formed in the recorded article includes various kinds, for example, a mark such as symbol and dot (example: mark for copy protection), a letter (example: validation letter for security), picture, and bar code.

In particular, with regard to the printed article of the invention, since the infrared absorbing composition exhibits red to magenta hue, when an image is formed by using an infrared absorbing ink which contains a red to magenta coloring agent in addition to the infrared absorbing composition, a recorded article having good visibility of an image, that is created with the infrared absorbing ink, is obtained without affecting the hue of the infrared absorbing ink expressed by the coloring agent.

Further, when an image is formed by superimposing a red- to magenta-colored image created with an ink containing a red to magenta coloring agent in addition to an image obtained by using the infrared absorbing ink, favorable visibility

of an image created with the red to magenta coloring agent may be attained.

With regard to an information recording medium having on a desired base a fluorophore section which emits fluorescence when light with specific wavelength is irradiated, an infrared absorbing section which contains the compound represented by formula (1) (i.e., the IR coloring material of the invention) to cover the fluorophore section and does not emit fluorescence may be formed. Further, the infrared absorbing section may be constituted to block a pathway for optical reading of information by an optical information reading unit.

Using a base which reflects infrared light of near-infrared region in at least its surface, an infrared absorbing ink layer containing the compound represented by formula (1) (i.e., the IR coloring material of the invention) may be formed closely or superimposed to an ink layer which is formed on the base and substantially has absorption in visible region but no absorption in near-infrared region, wherein the compound represented by formula (1) (i.e., the IR coloring material of the invention) is employed as an infrared absorbing material which absorbs infrared light in near-infrared region.

<Image Recording Method>

The image recording method related to the invention includes a process of recording an image by applying the infrared absorbing ink of the invention to a recording medium. According to the image recording method of the invention, an image is formed with the infrared absorbing ink in which the infrared absorbing composition as described above is used and, therefore, the recorded image having excellent light resistance and also having red to magenta hue may be obtained.

In particular, with regard to the image recording method of the invention, as the infrared absorbing composition exhibits red to magenta hue, when an image formed by using an infrared absorbing ink which contains a red to magenta coloring agent in addition to the infrared absorbing composition is recorded, favorable visibility of an image created with the infrared absorbing ink may be attained without affecting the hue of the infrared absorbing ink that is expressed by the coloring agent.

Further, even when an image is recorded by superimposing a red- to magenta-colored image created with an ink containing a red to magenta coloring agent in addition to an image obtained by using the infrared absorbing ink, favorable visibility of an image created with the red to magenta coloring agent may be attained.

Application of the infrared absorbing ink for recording an image may be carried out using a known method such as a coating method, a printing method, or an ink jet method. As a coating method, a bar coating may be used, for example. As a printing method, a Gravure printing, a lithographic printing or the like may be used. As an ink jet method, a charge control type method by which ink ejection is carried out by using electrostatic attraction, a drop-on-demand type method using vibration pressure of a Piezo device (i.e., pressure pulse type method), or a thermal type method which uses pressure generated by air bubbles formed by heating ink (i.e., BUBBLE JET (registered trade mark)), etc. may be used.

After applying the ink, one or more other processes such as a process of drying the ink and/or a process of (heat) pressing the recorded image may be also included.

<Image Detecting Method>

The image detecting method according to the invention includes a process of detecting information of an image by using an infrared detector, wherein the image is formed on a recording medium by the image recording method of the invention as described above. Since the image as a subject to be detected has good light resistance and has red to magenta hue, the detectability (such as readability) may be stably maintained for a long time when detection is made by using an infrared detector, and also good visibility of red to magenta hue may be attained.

Detection of image information included in an image is carried out by irradiating the recorded surface of a recorded article having recorded image with infrared light and detecting various image information using an infrared detector. With a non-colored composition, an image section containing the IR coloring material may not be visually recognized or is difficult to be recognized. However, when irradiated with infrared light, the region containing the IR coloring material absorbs infrared light, and therefore by detecting the reflected light or fluorescence at the time of irradiation, image information including pattern information such as a mark such as symbol and dot, a letter, a picture, and a bar code, or location information may be read.

As for the infrared detector, an apparatus for collecting and detecting reflected light, and the like at the time of irradiation may be used. Detection may be appropriately carried out by using a light with wavelength of from 800 to 1,200 nm. As for the light source, a light source for irradiating infrared light may be used. A light source for irradiating light including light of wavelengths other than the infrared light may be used by adding an infrared transmitting filter.

EXAMPLES

Herein below, the invention is described in further detail by reference to examples. However, as long as not departing from of the gist thereof, the invention is not limited by the examples. In addition, unless specifically described otherwise, the "part" is based on the mass.

(Example 1)

- Preparation of printing ink-

By mixing the components of the composition shown below, the infrared absorbing printing ink (I) was prepared.

<Composition of infrared absorbing printing ink (1)>

- infrared absorbing coloring material shown in Table 1 (IR coloring material) ... 20 parts
- vinyl acetate resin ... 10 parts

(trade name: S-LEC A, manufactured by SEKISUI CHEMICAL CO., LTD.)

- saturated polyester (trade name: VYLON 103, manufactured by TOYOBO CO., LTD.) ··· 5 parts
- polyurethane elastomer ··· 12 parts (trade name: N-2304, manufactured by Nippon Polyurethane Industry Co., Ltd.)
- isocyanate curing agent ··· 3 parts (trade name: JA-960, manufactured by JUJO CHEMICAL CO., LTD.)
- triethylene diamine ··· 0.5 parts
- solvents ··· 70 parts
  (toluene (SP value: 8.9)/methyl isobutyl ketone (SP value: 8.3) = 70/30 [mass ratio])

Table 1

| Infrared adsorbing agent | Color | | | Remarks |
|---|---|---|---|---|
| | L* | a* | b* | |
| Compound 1 | 34 | 16 | 2 | The invention |
| Compound 2 | 36 | 15 | 3 | The invention |
| Compound 5 | 35 | 17 | 2 | The invention |
| Compound 23 | 29 | 6 | 26 | The invention |
| Compound 24 | 28 | 4 | 29 | The invention |
| Compound 25 | 30 | 3 | 30 | The invention |
| Comparative infrared absorbing agent A | 25 | -27 | 25 | Comparative |
| Comparative infrared absorbing agent B | 20 | -19 | 31 | Comparative |

Herein, the comparative infrared absorbing agents A and B of Table 1 indicate the following compounds.

C omparative infrared absorbing agent A:

N,N,N',N'-tetrakis(p-di-n-butylaminophenyl)-p-phenylene diaminium perchlorate salt

C omparative infrared absorbing agent B: vanadyl 2,3-naphthalocyanine

-Image recording-

By using each of the infrared absorbing printing ink obtained above, bar code pattern was formed by Gravure printing on a regular paper (trade name: MP-120, manufactured by PLUS Corporation), that is a base paper.

Subsequently, after forming the bar code pattern, another bar code pattern was additionally formed by using the infrared absorbing ink (2) having the composition shown below.

<Composition of infrared absorbing ink (2)>

- infrared absorbing coloring material shown in Table 1 (IR coloring material) ··· 5 parts
- vinyl acetate resin ··· 15 parts
  (trade name: S-LEC A, manufactured by SEKISUI CHEMICAL CO., LTD.)
- saturated polyester (trade name: VYLON 103, manufactured by TOYOBO CO., LTD.)··· 5 parts
- polyurethane elastomer ··· 12 parts (trade name: N-2304, manufactured by Nippon Polyurethane Industry Co., Ltd.)
- isocyanate curing agent ··· 3 parts
  (trade name: JA-960, manufactured by JUJO CHEMICAL CO., LTD.)
- triethylene diamine ··· 0.5 parts
- solvent ··· 70 parts
  (toluene (SP value: 8.9)/methyl isobutyl ketone (SP value: 8.3) = 70/30 [mass ratio])

Next, on top of the bar code pattern formed by superimposing two layers, a process ink further having infrared transmittance (FDOL Magenta, trade name, manufactured by TOYO INK. MFG CO., LTD.) was applied by Gravure printing to form a colored layer having visible color (magenta). As a result, a printed article having a bar code pattern provided inside the matter was produced. The visible color (magenta) is a color which is included in the red to magenta hue of the invention.

Two kinds of semiconductor laser beam having wavelengths of 830 nm and 905 nm respectively were irradiated onto the printed article, and the detection was made by using a filter which cuts off the emission light having wavelength of 950 nm or less. As a result, it was possible to read the pattern formed by the infrared absorbing ink.

Subsequently, xenon light of 70,000 lux was irradiated continuously for 200 hours onto the printed article by using a xenon lamp. After that, the reading state of the bar code pattern after the irradiation was evaluated. For the evaluation, PCS (print · contrast · signal) of 0.6 or more was evaluated as "good," and PCS (print · contrast · signal) of less than 0.6 was evaluated as "bad." The evaluation results are shown in Table 2 below.
After the irradiation with the xenon light, variation in visibility of the visible color (magenta) given by the process ink (FDOL magenta) was evaluated as follows. The reflection spectrum was evaluated with a spectrophotometer (U-4100 Spectrophotometer (trade name) manufactured by Hitachi), and the variation in absorbance was measured and recorded as reduction ratio. The evaluation results are shown in Table 2 below. With regard to the variation in visibility of the layer colored with visible color (magenta), it is determined as good when the reduction ratio of the absorbance is less than 5%, and as bad when it is 10% or more.

Table 2

| Infrared absorbing agent | Reading before irradiation | Reading after irradiation | Variation in visibility of visible color (orange) layer | Remarks |
|---|---|---|---|---|
| Compound 1 | Good | Good | Good | The invention |
| Compound 2 | Good | Good | Good | The invention |
| Compound 5 | Good | Good | Good | The invention |
| Compound 23 | Good | Good | Good | The invention |
| Compound 24 | Good | Good | Good | The invention |
| Compound 25 | Good | Good | Good | The invention |
| Compound 42 | Good | Good | Good | The invention |

(continued)

| Infrared absorbing agent | Reading before irradiation | Reading after irradiation | Variation in visibility of visible color (orange) layer | Remarks |
|---|---|---|---|---|
| Compound 43 | Good | Good | Good | The invention |
| Compound 51 | Good | Good | Good | The invention |
| Compound 58 | Good | Good | Good | The invention |
| Compound 65 | Good | Good | Good | The invention |
| Comparative infrared absorbing agent A | Good | Bad | Bad | Comparative example |
| Comparative infrared absorbing agent B | Good | Bad | Bad | Comparative example |

As shown in Table 1 above, it is evident that the bar code pattern in the printed article of the invention has high light resistance.
It is also evident that the printed article of the invention has excellent visibility of the layer colored with visible color (magenta).

(Examples 2 and 3)

The printed article was prepared in the same manner as in Example 1 except that the solvent (a mixture solvent of toluene and methyl isobutyl ketone) in the composition of the infrared absorbing ink (1) and (2) is replaced with n-pentane (SP value: 7.0; Example 2) or ethanol (SP value: 12.7; Example 3), and evaluated. The evaluation results are shown in Table 3 below.
Table 3

| Infrared absorbing agent | Example 2 | | | Example 3 | | | Remarks |
|---|---|---|---|---|---|---|---|
| | Reading before irradiation | Reading after irradiation | Variation in visibility of visible color (magenta) layer | Reading before irradiation | Reading after irradiation | Variation in visibility of visible color (magenta) layer | |
| Compound 1 | Good | Bad | Bad | Good | Bad | Good | Comparative example |
| Compound 2 | Good | Bad | Bad | Good | Bad | Good | Comparative example |
| Compound 5 | Good | Bad | Good | Good | Bad | Bad | Comparative example |
| Compound 23 | Good | Bad | Bad | Good | Bad | Good | Comparative example |
| Compound 24 | Good | Bad | Good | Good | Bad | Bad | Comparative example |
| Compound 25 | Good | Bad | Good | Good | Bad | Good | Comparative example |

(continued)

| Infrared absorbing agent | Example 2 | | | Example 3 | | | Remarks |
|---|---|---|---|---|---|---|---|
| | Reading before irradiation | Reading after irradiation | Variation in visibility of visible color (magenta) layer | Reading before irradiation | Reading after irradiation | Variation in visibility of visible color (magenta) layer | |
| Comparative infrared absorbing agent A | Good | Bad | Bad | Good | Bad | Bad | Comparative example |
| Comparative infrared absorbing agent B | Good | Bad | Bad | Good | Bad | Bad | Comparative example |

As shown in Table 3 above, when the SP value of the solvent is either too low (Example 2) or too high (Example 3), it was not possible to obtain good light resistance.

(Example 4)

By mixing the components with the composition shown below, an ultraviolet curable ink having an infrared absorbing property was prepared.

<Composition of infrared curable ink>

- PHOTOMER 5018 ... 60 parts
  (trade name, aliphatic polyester tetraacrylate; manufactured by SAN NOPCO LTD.)
- KAYARAD TMPTA (SP value: 10.5) ··· 14 parts
  (trade name, trimethylol propane triacrylate; manufactured by Nippon Kayaku Co., Ltd.)
- KA YACURE-MBP (SP value: 1.7) ... 1 part
  (trade name, 3, 3'-dimethyl-4-metboxybenzophenone; manufactured by Nippon Kayaku Co., Ltd.)
- NISSOCURE TX (thioxanthone; manufactured by Nippon Soda Co., Ltd.) ... 8 parts
- SANDORAY 1000 ···1 part
  (t rade name, 4-phenoxydichloro acetophenone, manufactured by Sandoz)
- white petrolatum ··· 4 parts
- infrared absorbing coloring material shown in Table 1 (IR coloring material) ··· 12 parts

By using the ultraviolet curable ink obtained, a mark for copy protection was printed on the same base paper as in Example 1 by Gravure printing. On top of the printed mark for copy protection, a process ink (FDOL magenta, trade name, manufactured by TOYO INK MFG. CO., LTD.) was applied as a layer by Gravure printing to hide the mark for copy protection, thus obtaining a printed article.

The mark for copy protection that is hidden by the process ink was irradiated with infrated light using a linear sensor (trade name: TCD1500C, manufactured by Toshiba) in which the infrared cut-off filter of linear sensor was replaced with an infrared transmitting filter (trade name: IR83, manufactured by Hoya) as a detection device, and the reflected light was detected.

The mark for copy protection was not recognized by visual observation due to the presence of the layer colored with the process ink. However, by using the detection device, only the mark for copy protection may be detected in the infrared range without having the printed layer made of a process ink detected. In other words, since the process ink has no absorption in the infrared range, it was possible to detect only the infrared-absorbing mark for copy protection present under the process ink.

The reflection light intensity of the area of the mark for copy protection at the time of detecting the mark was

divided by the reflection light intensity of the area outside the mark for copy protection. The resulting value of the comparative infrared absorbing agent A was set to 1, and a ratio of the resulting value with respect to the resulting value of the comparative infrared absorbing agent A was calculated for each compound. The results are shown in Table 4 below.

In addition, the obtained printed article was irradiated with xenon light of 70,000 lux continuously for 72 hours by using a xenon lamp. After the irradiation, similar to above, the reflection light intensity of the area of the mark for copy protection was divided by the the reflection light intensity of the area outside the mark for copy protection, and the variation ratio [%] compared to the value before the irradiation was calculated to use it as an index for evaluation of light resistance. The results are shown in Table 4 below.

In addition, after the irradiation with the xenon light, the visibility of the layer colored with visible color (orange) by using process ink (FDOL magenta) was evaluated in the same manner as in Example 1. The evaluation results are shown in the following Table 4.

[Table4]

| Infrared absorbing agent | Strength of the reflected light before irradiation | Variation amount after irradiation [%] | Variation in visibility of visible color (orange) layer | Remarks |
|---|---|---|---|---|
| Compound 1 | 0.2 | <1 | Good | The invention |
| Compound 2 | 0.4 | 3 | Good | The invention |
| Compound 5 | 0.3 | 4 | Good | The invention |
| Compound 23 | 0.5 | 4 | Good | The invention |
| Compound 24 | 0.5 | 3 | Good | The invention |
| Compound 25 | 0.2 | 2 | Good | The invention |
| Compound 42 | 0.5 | 4 | Good | The invention |
| Compound 43 | 0.4 | 3 | Good | The invention |
| Compound 51 | 0.5 | 4 | Good | The invention |
| Compound 58 | 0.5 | 3 | Good | The invention |
| Compound 65 | 0.3 | 4 | Good | The invention |
| Comparative infrared absorbing agent A | 1 | 16 | Bad | Comparative example |
| Comparative infrared absorbing agent B | 1.1 | 15 | Bad | Comparative example |

As shown in Table 4 above, the ultraviolet curable ink of the invention has high detection sensitivity, and also has excellent light resistance.

(Examples)

By mixing the components with the composition shown below, an ultraviolet curable ink having an infrared absorbing property was prepared.

<Composition of ultraviolet curable ink>

- EPICOAT 828 ··· 25 parts
  (trade name, epoxy resin; manufactured by JER)
- KAYARAD TMPTA (SP value: 10.5) ··· 15 parts
  (trade name, trimethylol propane triacrylate; manufactured by Nippon Kayaku Co., Ltd.)

- KAYARAD DPHA (SP value: 11.1) ··· 60 parts
  (trade name, dipentaerythritol hexaacrylate; manufactured by Nippon Kayaku Co., Ltd.)
- KAYACURE-DETX ··· 3 parts
  (trade name, 2,4'-dieth.ylthioxanthone; manufactured by Nippon Kayaku Co., Ltd.)
- KAYACURE-DMBI ··· 3 parts
  (trade name, p-diznetltylamino benzoic acid isoamyl ester; manufactured by Nippon Kayaku Co., Ltd.)
- infrared absorbing coloring material shown in Table I (IR coloring material) ... 12 parts

The detection was made in the same manner as in Example 4. As a result, the mark for copy protection was not recognized by visual observation due to the presence of the layer colored with the process ink. However, by using the detection device, only the mark for copy protection was detected in the infrared range without having the printed layer made of a process ink detected. The ultraviolet curable ink of the invention exhibited high detection sensibility.
In addition, by using a xenon lamp, xenon light irradiation was performed in the same manner as in Example 4 to evaluate the light resistance. Consequently, substantially the the same results as those shown in Table 3 were obtained, indicating the ultraviolet curable ink of the invention has high light resistance. With regard to the visibility of the layer colored with visible color (magenta), favorable results were obtained similar to Example 3.

(Example 6)

By mixing the components in the composition shown below, an ultraviolet curable ink having an infrared absorbing property was prepared.

<Composition of ultraviolet curable ink>

- PHOTOMER 5018 ··· 62 parts
  (trade name, aliphatic polyester tetraacrylate, manufactured by SAN NOPCO LTD.)
- KAYARAD TMPTA (SP value: 10.5) ··· 15 parts
  (trade name, trimethylol propane triacrylate, manufactured by Nippon Kayaku Co., Ltd.)
- KAYACURE-MBP ··· 61 parts
  (trade name, 3,3'-dimethyl-4-methoxybenzophenone, manufactured by Nippon Kayaku Co., Ltd.)
- NISSOCURE TX (trade name, thioxanthone; manufactured by Nippon Soda Co., Ltd.) ··· 4 parts
- SANDORAY 1000 ··· 4 parts
  (trade name, 4-phenoxydichloro acetophenone, manufactured by Sandoz)
- white petrolatum ··· 5 parts
- infrared absorbing coloring material shown in Table 1 (IR coloring material) ··· 5 parts

The detection was made in the same manner as in Example 4. As a result, the mark for copy protection was not recognized by visual observation due to the presence of the layer colored with the process ink. However, by using the detection device, only the mark for copy protection was detected in the infrared range without having the printed layer made of a process ink detected. The ultraviolet curable ink of the invention exhibited high detection sensibility.
In addition, by using a xenon lamp, xenon light irradiation was performed in the same manner as in Example 4 to evaluate the light resistance. Consequently, substantially the results as those shown in Table 3 were obtained, indicating that the ultraviolet curable ink of the invention has high light resistance. With regard to the visibility of the layer colored with visible color (magenta), favorable results were obtained similar to Example 3.
According to the invention, an infrared absorbing composition which exhibits red to magenta hue and also has excellent light resistance may be provided.
In addition, according to the invention, an infrared absorbing ink, a printed article, an image recording method, and an image detecting method, having good visibility of a red- to magenta-colored image and also enabling stable reading of image information for a long period of time, may be provided.
The invention may be applied to a security-related field such as letter or image validation and a field of exchanging information by assigning a mark such as a symbol, a dot, or a bar code, and it may be used for, for example, copy protection, providing hidden information and the like.
Exemplary embodiments of the invention include, but are not limited to, the following.

<1> An infrared absorbing composition comprising:

a compound that is represented by the following formula (1) and has a hue in a powder state in the range of $20<L^*<40$, $1<a^*<20$, and $1<b^*<33$ in CIELAB space;
an organic solvent having a solubility parameter in the range of from 7.3 to 12.1; and
a resin;

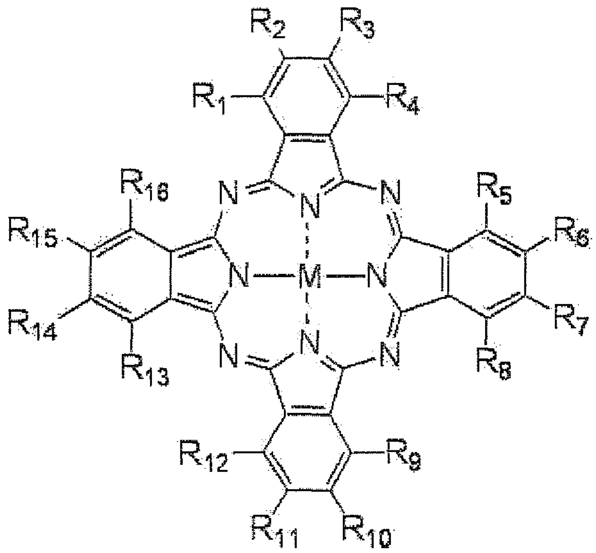

Formula (1)

wherein in formula (1), each of $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, and $R_{16}$ independently represents a hydrogen atom or a substituent group, provided that at least one of $R_1$ to $R_{16}$ represents an $R_{17}$-X- group or that the compound represented by formula (1) contains at least one condensed-ring structure in which any adjacent two of $R_1$ to $R_{16}$ form a ring; X represents -S-, -NH-, -$NR_{18}$-, or -O-; each of $R_{17}$ and $R_{18}$ independently represents an aliphatic group or an aryl group; and M represents two atoms selected from the group consisting of hydrogen atoms and monovalent metal atoms, or a divalent metal atom, or a divalent substituted metal atom moiety including a trivalent or tetravalent metal atom and a substituent group.

<2> The infrared absorbing composition of <1>, wherein M in formula (1) is Cu.
<3> The infrared absorbing composition of <1> or <2>, wherein the compound that is represented by formula. (1) and has the hue in the powder state in the range of $20<L^*<40$, $1<a^*<20$, and $1<b^*<33$ in CIELAB space is at least one selected from the group consisting of the compounds represented by the following formula (1a) and the compounds represented by the following formula (1b):

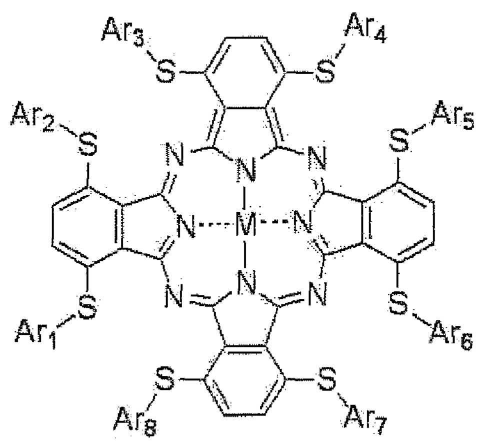

Formula (1a)

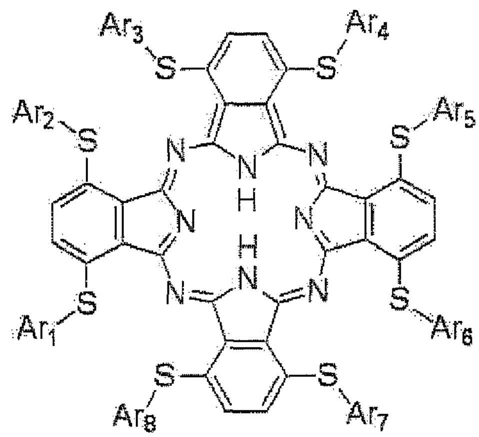

Formula (1b)

wherein M represents two atoms selected from the group consisting of hydrogen atoms and monovalent metal atoms, or a divalent metal atom, or a divalent substituted metal atom moiety including a trivalent or tetravalent metal atom and a substituent group; and each of $Ar_1$, $Ar_2$, $Ar_3$, $Ar_4$, $Ar_5$, $Ar_6$, $Ar_7$, and $Ar_8$ independently represents a substituted or unsubstituted aryl group.

<4> The infrared absorbing composition of any one of <1> to <3>, wherein the organic solvent having a solubility parameter in the range of from 7.3 to 12.1 is at least one selected from the group consisting of aromatic hydrocarbons, aliphatic hydrocarbons, ketones, esters, ethers and alcohols.

<5> The infrared absorbing composition of any one of <1> to <4>, wherein the resin is at least one selected from the group consisting of rosin, modified rosins, rosin derivatives, modified rosin derivatives, petroleum resins, dicyclopentadiene resins and modified dicyclopentadiene resins.

<6> The infrared absorbing composition of any one of <1> to <5>, wherein a content of the resin by mass ratio is from 1 % by mass to 99% by mass with respect to a total solid content of the composition.

<7> The infrared absorbing composition of any one of <1> to <6>, wherein the organic solvent having a solubility parameter in the range of from 7.3 to 12.1 includes two or more organic solvents each having a solubility parameter in the range of from 7.3 to 12.1.

<8> An infrared absorbing ink comprising the infrared absorbing composition of any one of <1> to <7>.

<9> A recorded article comprising a recording medium and an image formed thereon using the infrared absorbing ink of <8>.

<10> An image recording method comprising recording an image by applying on a recording medium the infrared absorbing ink of <8>.

<11> An image detection method comprising detecting, by an infrared ray detection device, image information of the image forked by the image recording method of <10> on the recording medium.

All publications, patent applications, and technical standards mentioned in this specification are herein incorporated by reference to the same extent as if each individual publication, patent application, or technical standard was specifically and individually indicated to be incorporated by reference.

## Claims

**1.** An infrared absorbing composition comprising:

a compound that is represented by the following formula (1) and has a hue in a powder state in the range of $20<L^*<40$, $1<a^*<20$, and $1<b^*<33$ in CIELAB space;
an organic solvent having a solubility parameter in the range of from 7.3 to 12.1; and
a resin;

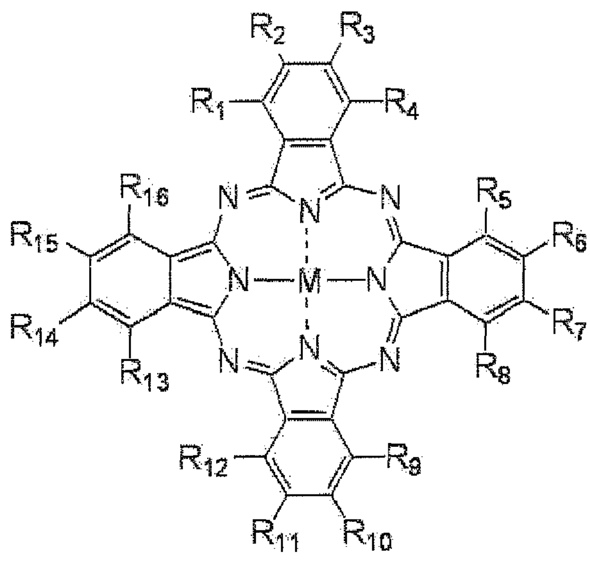

Formula (1)

wherein in formula (1), each of $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$, $R_{15}$, and $R_{16}$ independently represents a hydrogen atom or a substituent group, provided that at least one of $R_1$ to $R_{16}$ represents an $R_{17}$-X- group or that the compound represented by formula (I) contains at least one condensed-ring structure in which any adjacent two of $R_1$ to $R_{16}$ form a ring: X represents -S-, -NH-, -$NR_{18}$-, or -O-; each of $R_{17}$ and $R_{18}$ independently represents an aliphatic group or an aryl group; and M represents two atoms selected from the group consisting of hydrogen atoms and monovalent metal atoms, or a divalent metal atom, or a divalent substituted metal atom moiety including a trivalent or tetravalent metal atom and a substituent group.

**2.** The infrared absorbing composition of claim 1, wherein M in formula (1) is Cu.

**3.** The infrared absorbing composition of claim 1 or 2, wherein the compound that is represented by formula (1) and has the hue in the powder state in the range of $20<L^*<40$, $1<a^*<20$, and $1<b^*<33$ in CIELAB space is at least one selected from the group consisting of the compounds represented by the following formula (1a) and the compounds represented by the following formula (1b):

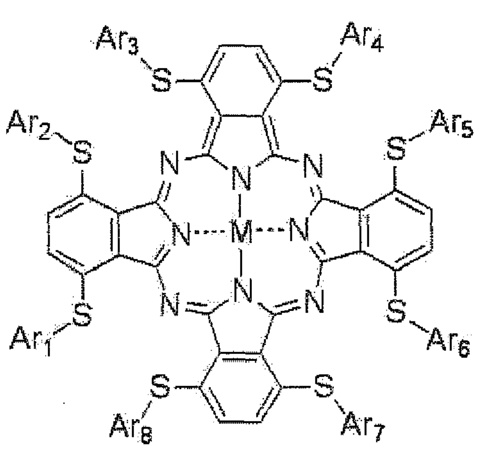

Formula (1a)

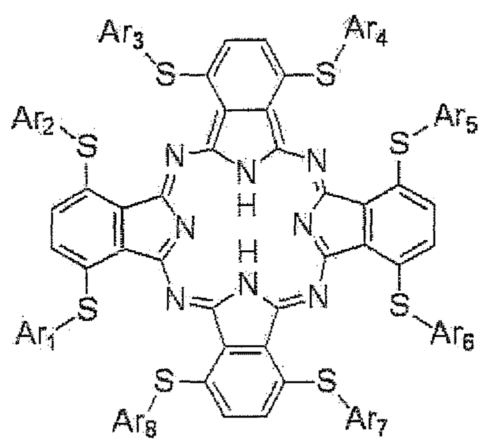

Formula (1b)

wherein M represents two atoms selected from the group consisting of hydrogen atoms and monovalent metal atoms, or a divalent metal atom, or a divalent substituted metal atom moiety including a trivalent or tetravalent metal atom and a substituent group; and each of $Ar_1$, $Ar_2$, $Ar_3$, $Ar_4$, $Ar_5$, $Ar_6$, $Ar_7$, and $Ar_8$ independently represents a substituted or unsubstituted aryl group.

**4.** The infrared absorbing composition of any one of claims 1 to 3, wherein the organic solvent having a solubility parameter in the range of from 7.3 to 12.1 is at least one selected from the group consisting of aromatic hydrocarbons, aliphatic hydrocarbons, ketones, esters, ethers and alcohols.

**5.** The infrared absorbing composition of any one of claims 1 to 4, wherein the resin is at least one selected from the group consisting of rosin, modified rosins, rosin derivatives, modified rosin derivatives, petroleum resins, dicyclopentadiene resins and modified dicyclopentadiene resins.

**6.** The infrared absorbing composition of any one of claims 1 to 5, wherein a content of the resin by mass ratio is from 1% by mass to 99% by mass with respect to a total solid content of the composition.

**7.** The infrared absorbing composition of any one of claims 1 to 6, wherein the organic solvent having a solubility parameter in the range of from 7.3 to 12.1 includes two or more organic solvents each having a solubility parameter in the range of from 7.3 to 12.1.

**8.** An infrared absorbing ink comprising the infrared absorbing composition of any one of claims 1 to 7.

**9.** A recorded article comprising a recording medium and an image formed thereon using the infrared absorbing ink of claim 8.

**10.** An image recording method comprising recording an image by applying on a recording medium the infrared absorbing ink of claim 8.

**11.** An image detection method comprising detecting, by an infrared ray detection device, image information of the image formed by the image recording method of claim 1.0 on the recording medium.

Europäisches Patentamt
European Patent Office
Office européen des brevets

# EUROPEAN SEARCH REPORT

Application Number
EP 11 16 5446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 282 894 A (ALBERT BERNHARD [DE] ET AL) 1 February 1994 (1994-02-01)<br>* claims; examples *<br>----- | 1-11 | INV.<br>C09D11/00<br>C09D11/02<br>C09D11/10<br>C09B47/06 |
| X | EP 1 308 485 A1 (SICPA HOLDING SA [CH]) 7 May 2003 (2003-05-07)<br>* claims; examples *<br>----- | 1-11 | |
| X | WO 2004/020529 A1 (AVECIA LTD [GB]; CAMPBELL JAMES STANLEY [GB]; CARR KATHRYN [GB]; GRIFF) 11 March 2004 (2004-03-11)<br>* claims; examples *<br>----- | 1-11 | |
| X | US 6 468 713 B1 (TERAO HIROSHI [JP] ET AL) 22 October 2002 (2002-10-22)<br>* examples *<br>----- | 1-11 | |
| X | GB 2 237 284 A (MINNESOTA MINING & MFG [US]) 1 May 1991 (1991-05-01)<br>* examples *<br>----- | 1-11 | TECHNICAL FIELDS SEARCHED (IPC) |
| X | WO 2007/002981 A1 (SILVERBROOK RES PTY LTD [AU]; VONWILLER SIMONE CHARLOTTE [AU]; RIDLEY) 11 January 2007 (2007-01-11)<br>* claims; examples *<br>----- | 1-11 | C09D<br>C09B |
| X | JP 2009 051774 A (UNIV NIHON; NISSAN CHEMICAL IND LTD)<br>12 March 2009 (2009-03-12)<br>* examples *<br>----- | 1-11 | |
| X | JP 2007 056105 A (NIPPON CATALYTIC CHEM IND) 8 March 2007 (2007-03-08)<br>* examples *<br>----- | 1-11 | |
| X,P | WO 2010/100964 A1 (FUJIFILM CORP [JP]; KOBAYASHI KATSUMI [JP]; KIMURA KEIZO [JP]; NII KAZ) 10 September 2010 (2010-09-10)<br>* examples *<br>----- | 1-11 | |

2

The present search report has been drawn up for all claims

| Place of search | Date of completion of the search | Examiner |
|---|---|---|
| Munich | 10 August 2011 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 16 5446

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2011

| Patent document cited in search report | | Publication date | Patent family member(s) | | | Publication date |
|---|---|---|---|---|---|---|
| US 5282894 | A | 01-02-1994 | DE | 4202038 | A1 | 29-07-1993 |
| | | | EP | 0553614 | A1 | 04-08-1993 |
| | | | JP | 7247454 | A | 26-09-1995 |
| EP 1308485 | A1 | 07-05-2003 | AT | 325849 | T | 15-06-2006 |
| | | | AU | 2002333761 | B2 | 07-08-2008 |
| | | | BR | 0213711 | A | 26-10-2004 |
| | | | CA | 2463787 | A1 | 08-05-2003 |
| | | | CN | 1578817 | A | 09-02-2005 |
| | | | DE | 60211368 | T2 | 22-02-2007 |
| | | | DK | 1440129 | T3 | 11-09-2006 |
| | | | WO | 03038001 | A1 | 08-05-2003 |
| | | | EP | 1440129 | A1 | 28-07-2004 |
| | | | ES | 2261784 | T3 | 16-11-2006 |
| | | | IL | 161399 | A | 07-08-2008 |
| | | | JP | 4308005 | B2 | 05-08-2009 |
| | | | JP | 2005507451 | A | 17-03-2005 |
| | | | MX | PA04003920 | A | 23-07-2004 |
| | | | PT | 1440129 | E | 31-08-2006 |
| | | | RU | 2292370 | C2 | 27-01-2007 |
| | | | UA | 82181 | C2 | 25-03-2008 |
| | | | US | 2004253419 | A1 | 16-12-2004 |
| | | | ZA | 200403223 | A | 03-11-2004 |
| WO 2004020529 | A1 | 11-03-2004 | AT | 361345 | T | 15-05-2007 |
| | | | AU | 2003248995 | A1 | 19-03-2004 |
| | | | BR | 0313671 | A | 21-06-2005 |
| | | | CN | 1678691 | A | 05-10-2005 |
| | | | DE | 60313625 | T2 | 27-12-2007 |
| | | | EP | 1537181 | A1 | 08-06-2005 |
| | | | HK | 1083856 | A1 | 13-06-2008 |
| | | | JP | 2005537319 | A | 08-12-2005 |
| | | | US | 2006000388 | A1 | 05-01-2006 |
| | | | ZA | 200500797 | A | 25-10-2006 |
| US 6468713 | B1 | 22-10-2002 | EP | 1085057 | A1 | 21-03-2001 |
| | | | WO | 0060014 | A1 | 12-10-2000 |
| | | | JP | 4436481 | B2 | 24-03-2010 |
| | | | JP | 2000281919 | A | 10-10-2000 |
| GB 2237284 | A | 01-05-1991 | US | 5168031 | A | 01-12-1992 |
| WO 2007002981 | A1 | 11-01-2007 | AU | 2006265751 | A1 | 11-01-2007 |
| | | | EP | 1913092 | A1 | 23-04-2008 |
| | | | US | 2007010645 | A1 | 11-01-2007 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 11 16 5446

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2011

| Patent document cited in search report | Publication date | Patent family member(s) | Publication date |
| --- | --- | --- | --- |
| JP 2009051774 A | 12-03-2009 | NONE | |
| JP 2007056105 A | 08-03-2007 | NONE | |
| WO 2010100964 A1 | 10-09-2010 | JP 2010229389 A | 14-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2043269 A
- JP 2138382 A
- JP 3079683 A
- JP 2008105958 A

### Non-patent literature cited in the description

- **ROBERT F. FEDORS.** *POLYMER ENGINEERING AND SCIENCE,* 1974, vol. 14 (2), 151-153
- Handbook of Surfactants. SANGYO-TOSHO Publishing Co., Ltd,